# FASCICULE DE BREVET EUROPEEN

(11) **EP 2 840 762 B1**
(45) Date de publication et mention de la délivrance du brevet: **30.09.2015**
(21) Numéro de dépôt: 14180559.8
(22) Date de dépôt: 11.08.2014
(51) Int. Cl.: H04L 29/08, G06F 3/06

(54) **Équipement de type lame productive multiserveur pour châssis modulaire, avec accès multiples par le réseau de gestion du châssis**
Ausrüstung vom Typ produktive Multiserver-Lamelle für modulare Grundplatte, mit Mehrfachzugang über das Grundplatten-Steuernetz
Multi-server productive blade device for a modular frame, with multiple access by the frame management network

(30) Priorité: 20.08.2013 FR 1358093
(43) Date de publication de la demande: 25.02.2015
(73) Titulaire: Online SAS, 75008 Paris (FR)
(72) Inventeur: De Turckheim, Grégoire, 75017 PARIS (FR); Malinge, Jérôme, 94270 Le Krémlin Bicêtre (FR)
(74) Mandataire: Dupuis-Latour, Dominique

(56) Documents cités:
- US-A1- 2004 260 842
- US-A1- 2008 043 750
- US-A1- 2009 031 051
- US-A1- 2009 234 936

## Description

L'invention concerne les équipements de réseau modulaires, en particulier les équipements tels que ceux utilisés dans les installations à grande échelle telles que grappes de serveurs, réseaux de télécommunications, routeurs... mises en oeuvre par les hébergeurs web, les fournisseurs d'accès Internet, les centres de stockage et de traitement de données de type *datacenter*, etc.

Ces équipements modulaires se présentent souvent sous la forme de châssis installés dans des baies, chaque châssis comportant une pluralité de modules ou "lames" amovibles insérées et juxtaposées dans autant d'emplacements ou *slots* du châssis, avec des lames dites "productives" offrant la fonctionnalité externe attendue, par exemple recueil du trafic de télécommunications, hébergement d'un ou plusieurs serveurs, etc.

Le US 2009/0031051 A1 illustre une telle architecture d'équipement.

L'invention concerne plus précisément l'accès à distance aux serveurs hébergés par ces équipements. En effet, afin de gérer l'installation il est nécessaire de pouvoir prendre le contrôle de tout serveur de manière à vérifier son fonctionnement, diagnostiquer des anomalies éventuelles, corriger un problème, reconfigurer certains paramètres, etc.

Le moyen le plus simple de prendre le contrôle d'un serveur est d'utiliser le port série ou la sortie video du serveur, qui sont reliés à sa "console" (interface de contrôle direct), et d'y brancher localement un ordinateur portable. Cette solution est simple à mettre en oeuvre, mais elle est contraignante car elle nécessite la présence physique d'un opérateur au même endroit que le serveur pour prendre la main sur celui-ci.

Pour une prise de contrôle à distance du serveur, le moyen le plus répandu et le plus pratique consiste à utiliser le réseau auquel est couplé le serveur et sur lequel il opère. Avec cette solution, il n'est plus nécessaire d'être physiquement présent ; en revanche, en cas de mauvaise configuration réseau ou autre défaillance de l'accès à distance il n'est, de fait, plus possible d'accéder au serveur et donc d'en prendre le contrôle pour corriger le problème. Un autre inconvénient de cette technique est que tous les éléments du serveur ne sont pas accessibles, notamment le micrologiciel (*firmware*) du BIOS, qu'il peut être souhaitable de reprogrammer dans certains cas.

La solution la plus courante pour contourner cette difficulté est de passer par un réseau distinct (ci-après "réseau de gestion"), sécurisé par rapport à l'utilisateur (typiquement le client de l'hébergeur), c'est-à-dire que ce dernier ne doit pas pouvoir accéder au réseau de gestion et à ses fonctionnalités.

Concrètement, le serveur est associé à un composant dénommé BMC *(Baseboard Management Controller*) interfacé entre le serveur du client (via son port série ou sa sortie video) et le réseau de gestion (via un port réseau Ethernet). Le BMC, qui est directement couplé au serveur, remplit deux séries de fonctions :
- en premier lieu, il assure des tâches courantes de gestion de bas niveau telles qu'allumage/extinction du serveur, redémarrage, *monitoring,* recueil de données d'état telles que la température du processeur, le niveau des alimentations, de la ventilation, etc.
- en second lieu, il autorise un contrôle du serveur à distance, en prenant l'accès local à ce serveur et en l'envoyant sur le réseau de gestion sécurisé.

Du point de vue économique, cette solution est relativement onéreuse, car elle implique de disposer d'un composant supplémentaire spécialisé (le BMC). Toutefois, dans une configuration conventionnelle où une lame productive ne comporte qu'un seul serveur (parfois deux serveurs) avec ses circuits associés, elle reste économiquement acceptable tant que le surcoût lié à l'ajout et à l'intégration du BMC (typiquement de l'ordre de 15 €) reste relativement faible par rapport au coût global de réalisation du serveur et des divers éléments de la lame, lorsque ce coût dépasse environ 400 €.

La situation est en revanche très différente lorsqu'un équipement regroupe un nombre important de serveurs desservis en commun par un même équipement (ci-après "plateforme de calcul" ou "plateforme"), par exemple sur une même lame de châssis. Tel est notamment le cas des architectures de type "microserveur", où chaque lame d'un châssis comporte sur une même carte de circuit un nombre important de serveurs semblables, typiquement jusqu'à vingt serveurs regroupés sur une même lame.

Dans un tel cas, le coût du BMC devant être associé à chacun des microserveurs ainsi que celui de son interfaçage avec le réseau sécurisé devient important comparé au coût unitaire d'un microserveur (quelques dizaines d'euros), de sorte que cette solution n'est pas économiquement viable. Un autre inconvénient est la surface occupée par les BMCs sur la lame, qui vient empiéter sur celle occupée par les microserveurs, réduisant donc sensiblement le nombre de microserveurs qu'il est possible de regrouper sur une même plateforme.

Un autre inconvénient encore de toute solution à base de BMC tient au fait que celui-ci donne accès à la totalité du serveur, avec notamment la possibilité de modifier des paramètres sensibles tels que ceux du BIOS. Pour pallier ce risque, il est nécessaire d'installer sur le BIOS un mot de passe, ce qui complique la mise en oeuvre et n'assure de toute façon qu'une sécurité relative dans la mesure où ce mot de passe n'est pas inviolable.

L'un des buts de l'invention est de pallier l'ensemble de ces inconvénients, en proposant un nouveau type de module d'interfaçage entre un réseau de gestion et une pluralité de serveurs, assurant les mêmes fonctions qu'un ensemble de BMCs qui seraient associées à ces serveurs, mais réalisé à partir de composants très bon marché, de manière à ne pas obérer l'avantage économique procuré par l'intégration d'un grand nombre de microserveurs sur une même plateforme productive.

Comme on le verra par la suite, ce module d'interfaçage selon l'invention est un module commun à l'ensemble des serveurs de la plateforme. Son coût relatif par serveur unitaire sera donc très réduit, et il n'occupera physiquement que très peu de place sur la carte de circuit.

Une difficulté, dans un tel cas (composant commun) est de disposer d'un composant pourvu d'un nombre suffisant de ports série pour permettre l'interfaçage à chacun des serveurs, par exemple un composant doté de vingt ports série.

Il existe certes des microcontrôleurs dotés de plusieurs ports série, jusqu'à quatre ports. Mais cela ne serait pas suffisant pour gérer un nombre élevé de serveurs, pouvant aller jusqu'à vingt serveurs sur une même plateforme. Pour cela il serait nécessaire de mettre en cascade un grand nombre de ces microcontrôleurs, jusqu'à onze microcontrôleurs à quatre ports pour disposer de suffisamment de ports série pour desservir vingt microserveurs - ce qui réduirait fortement l'intérêt économique de la solution, outre la complexité technique de la gestion des entrées/sorties entre ces composants multiples, ainsi que la surface occupée sur la carte de circuit.

L'invention permet, comme on le verra, de dépasser cette limitation technique par une solution simple permettant d'émuler en masse des ports série au moyen d'un seul microcontrôleur de type courant (et donc très peu coûteux) associé à un autre microcontrôleur, également de type courant, assurant la passerelle entre le premier microcontrôleur et le réseau de gestion.

L'invention permet notamment de résoudre le problème consistant à émuler un très grand nombre de ports série avec le peu de puissance qu'offre un microcontrôleur, et ceci avec un traitement en temps réel des signaux échangés, de manière notamment à ne perdre aucune donnée susceptible d'être reçue sur chaque port série émulé. En effet, si l'un des serveurs émet des données qui sont transmises au réseau de gestion, on ne peut pas se permettre d'ignorer pendant ce temps là les autres serveurs. De plus, un système présentant une trop grande latence ne serait pas envisageable, par exemple un système avec scrutation périodique des différents ports série, où les serveurs seraient interrogés tour à tour et ne seraient autorisés à émettre des données vers le réseau que pendant cette phase d'interrogation.

La configuration de l'invention, que l'on exposera en détail ci-après, permet de créer un "réseau" de ports série, entre un port série (émulé) à basse vitesse, pour chaque serveur, et un port série (matériel) à très haute vitesse, vers le réseau de gestion sécurisé via le composant passerelle. L'ensemble est vu depuis le réseau de gestion comme une liaison réseau unique traditionnelle permettant de prendre individuellement le contrôle de chacun des serveurs. Le coût de cet ensemble, fonctionnellement comparable à un BMC traditionnel associé à chacun des serveurs, est extrêmement faible, de l'ordre de quelques euros pour gérer typiquement jusqu'à une vingtaine de serveurs.

On verra également que la solution de l'invention permet de gérer efficacement et simplement la question de la protection du BIOS, sans recours à des composants supplémentaires et sans compromis sur la sécurité. Plus précisément, l'invention propose à cet effet un équipement de type lame productive multiserveur pour châssis modulaire tel que divulgué par exemple par le US 2009/0031051 A1 précité, c'est-à-dire comprenant une pluralité de serveurs et un module de gestion, apte à être couplé d'une part à au moins un serveur et d'autre part à un réseau de gestion du châssis via une interface réseau.

De façon caractéristique, avec N serveurs et le module de gestion sur une même carte de circuit, le module de gestion comporte un composant passerelle, comprenant un port série matériel et des moyens de conversion du flux de données sur l'interface réseau en un flux de données série sur le port série matériel et *vice versa,* et un composant répartiteur interposé entre les N serveurs et le composant passerelle. Le composant répartiteur comprend : un port série matériel de composant répartiteur, relié par une première liaison série bidirectionnelle au port série matériel du composant passerelle ; une pluralité de N broches programmables, chacune des ces broches programmables étant reliée par une seconde liaison série bidirectionnelle respective à un port série matériel correspondant de l'un des N serveurs ; et des moyens de contrôle des entrées/sor-ties, aptes à configurer chacune des N broches programmables en un port série émulé et à coupler sélectivement ce port série émulé au port série matériel du composant répartiteur.

Pour les données émises en provenance des serveurs, les moyens de contrôle des entrées/sorties du composant répartiteur comprennent : des moyens de réception de données incidentes reçues sur le port série matériel du composant répartiteur, en provenance du réseau de gestion via le composant passerelle ; et des moyens de routage sélectif de ces données incidentes vers celui des N ports série émulés qui correspond au serveur destinataire.

Pour les données reçues à destination des serveurs, les moyens de contrôle des entrées/sorties du composant répartiteur comprennent : des moyens de réception de données incidentes reçues sur l'un des N ports série émulés, en provenance du serveur correspondant à ce port ; et des moyens de routage de ces données incidentes vers le port série matériel du composant répartiteur, à destination du réseau de gestion via le composant passerelle.

Les secondes liaisons série entre les N serveurs et le composant répartiteur sont typiquement des liaisons asynchrones. Dès lors, les moyens de contrôle des entrées/sorties du composant répartiteur comprennent en outre : des moyens de scrutation, aptes à détecter une transition de signal sur chacun des N ports série émulés ; et des moyens de génération d'une interruption en cas de détection sur un port série émulé d'une transition de signal correspondant à la réception d'une donnée incidente en provenance du serveur relié à ce port série émulé.

Dans une forme de réalisation particulièrement avantageuse, les moyens de scrutation sont des moyens séquencés par une horloge du composant répartiteur à une fréquence de scrutation qui est un multiple impair, notamment le triple, de la fréquence des transitions de signal reçues sur les ports série émulés. Les moyens de scrutation sont alors aptes à générer, pour chaque port série émulé, une séquence d'échantillonnage cyclique : i) qui est synchronisée sur les impulsions de l'horloge séquençant la scrutation, ii) dont la fréquence de cycle correspond à la fréquence des transitions de signal, iii) qui commence à être générée après la première détection d'une transition de signal sur le port série émulé correspondant à un octet reçu en provenance du serveur, iv) puis continue à être générée cycliquement et de façon continue jusqu'à détection de la fin de l'octet en cours de réception en provenance du serveur, l'échantillonnage du signal étant opéré cycliquement sur un état de la séquence qui succède à l'état auquel le signal a commencé à être généré.

L'équipement peut comprendre en outre, entre chacun des N serveurs et le composant répartiteur, une liaison de transmission d'un signal de statut de BIOS du serveur, et dans lequel le composant répartiteur comprend des moyens de génération d'un message de statut de BIOS et d'émission de ce message vers le réseau de gestion du châssis via le port série matériel du composant répartiteur et la première liaison bidirectionnelle vers le composant passerelle.

Il peut également comprendre, entre chacun des N serveurs et le composant passerelle, une liaison de transmission d'un signal d'état de serveur, et dans lequel le composant passerelle comprend des moyens de génération d'un message d'état de serveur et d'émission de ce message vers le réseau de gestion du châssis via l'interface réseau.

On va maintenant décrire un exemple de mise en oeuvre du dispositif de l'invention, en référence aux dessins annexés où les mêmes références désignent d'une figure à l'autre des éléments identiques ou fonctionnellement semblables.
La Figure 1 est une illustration simplifiée, sous forme de schéma par blocs, d'une configuration selon l'état de la technique mettant en oeuvre un BMC d'interfaçage entre un serveur et le réseau de gestion.
La Figure 2 illustre, également sous forme de schéma par blocs, la technique d'émulation en masse de ports série selon l'invention.
La Figure 3 est un ensemble de deux chronogrammes expliquant la manière de gérer selon l'invention l'asynchronisme de la liaison série entre chaque serveur et le composant répartiteur assurant le recueil de ces données et leur routage vers le réseau de gestion sécurisé.

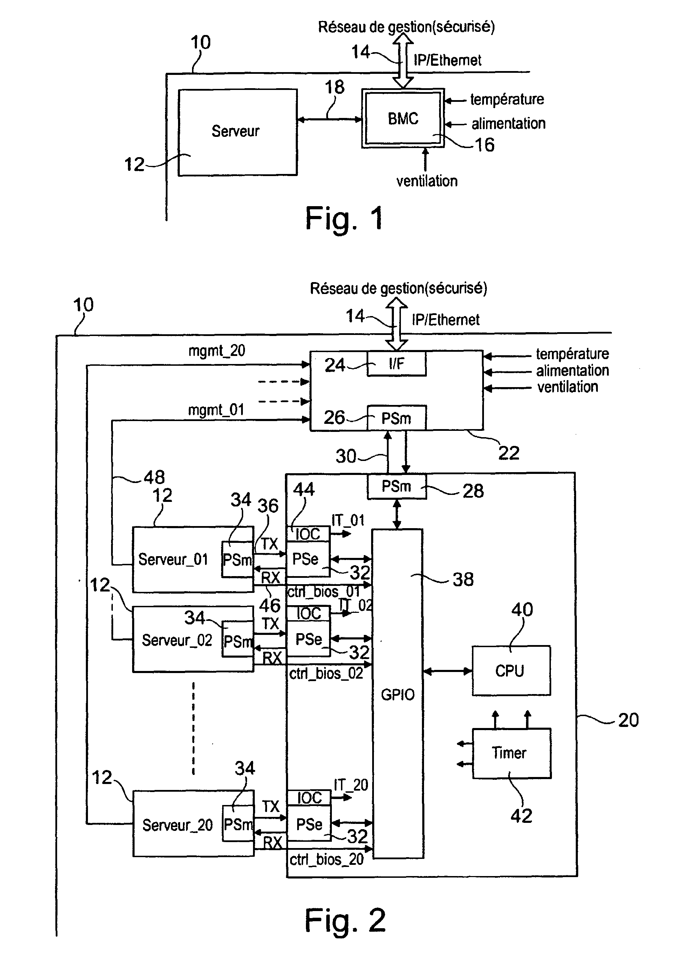

La Figure 1 illustre une configuration conventionnelle, dans laquelle on trouve sur une même carte de circuit ou lame de châssis un serveur 12 qu'il est possible de relier à un réseau de gestion sécurisé via une liaison 14, qui est une liaison de réseau généralement de type IP/Ethernet. L'interfaçage entre le serveur 12 et la liaison au réseau de gestion 14 est assuré par un composant dénommé BMC (*Baseboard Management Controller*), relié au serveur 12 par une liaison 18 à un port série ou un port video du serveur 12.

Un premier rôle du BMC est de recueillir un certain nombre d'informations telles que température, état des alimentations, ventilation, etc., à partir de divers capteurs et composants disposés sur la carte de circuit 10. Ces informations sont transmises au réseau de gestion qui analyse les données en provenance des diverses lames et prend éventuellement des actions appropriées telles que désactivation ou redémarrage d'un serveur, commande d'afficheur, envoi d'une alerte à une supervision générale, etc. L'autre rôle du BMC est de permettre une prise de contrôle à distance du serveur 12 par un opérateur ou par un logiciel de supervision générale au niveau du châssis, de la baie ou de l'installation.

Les BMC sont des composants dédiés à la gestion d'un unique serveur, parfois de deux serveurs, mais si l'on souhaite rassembler sur une même lame un nombre important de serveurs, comme dans les architectures de type "microserveur", si l'on voulait disposer des mêmes fonctions avec les moyens actuellement disponibles il serait nécessaire de prévoir sur la lame autant de BMCs que de serveurs, ce qui ne serait pas économiquement viable et conduirait à une emprise très importante de ces composants additionnels sur la surface disponible de la carte de circuit, limitant d'autant le nombre de microserveurs pouvant être rassemblés sur une même carte.

Pour résoudre cette difficulté, en assurant les mêmes fonctions que des BMCs et sans compromis sur la sécurité, l'invention propose une configuration de circuit illustrée de façon schématique sur la Figure 2.

Sur cette figure, on a représenté une pluralité de serveurs semblables 12, par exemple au nombre de N = 20 serveurs, rassemblés sur une même carte de circuit 10, par exemple d'une même lame productive d'un châssis, et interfacés à une unique liaison réseau IP/Ethernet 14 vers le réseau de gestion sécurisé du châssis.

Le module de gestion de l'invention, qui remplace le BMC 16 de la Figure 1 en assurant les mêmes fonctions pour l'ensemble des vingt serveurs 12, est constitué autour de deux composants, à savoir un composant 20 dénommé "composant répartiteur", réalisé à partir d'un microcontrôleur d'un modèle très simple donc de faible coût, et un composant 22 dénommé "composant passerelle".

Les serveurs 12 sont tous couplés au composant répartiteur 20, qui est interfacé à la liaison 14 au réseau de gestion via le composant passerelle 22. Ce composant passerelle 22 comprend un port réseau (port Ethernet) 24 relié à la liaison 14 et un port série matériel 26, ces deux ports 24, 26 étant couplés ensemble pour permettre un transfert bidirectionnel de données à grand débit, typiquement de l'ordre de 2 Mbps, nécessaire pour permettre la gestion simultanée d'une vingtaine de serveurs.

Le composant 22, outre sa fonction de passerelle, assure également le recueil des informations de température, alimentation, ventilation... de la lame 10, pour transmettre ces informations au réseau de gestion via la liaison 14.

Le composant répartiteur 20 possède, comme la très grande majorité des microcontrôleurs, un port série matériel 28, qui est relié au port série matériel du composant passerelle 22 via une première liaison série bidirectionnelle 30 à grand débit.

Du côté des serveurs 12, la liaison entre ces serveurs et le composant répartiteur 20 est, de façon caractéristique de l'invention, réalisée par des broches programmables du microcontrôleur en nombre égal à celui des serveurs. Ces broches programmables sont des GPIOs (*General Purpose Inputs*/*Outputs*) pilotées par une programmation appropriée du microcontrôleur de manière à émuler pour chacune un port série respectif 32, relié au port série matériel 34 du serveur correspondant via une seconde liaison série bidirectionnelle 36 à faible débit : en effet, le débit typique d'un port série émulé 32 est de l'ordre de 9600 bps, car il s'agit d'une broche programmable, donc gérée par logiciel avec les limitations inhérentes à cette technique, à la différence du port série 28 qui peut assurer un débit beaucoup plus élevé, de l'ordre de 2 Mbps, du fait que l'échange est réalisé entre deux ports matériels (respectivement les ports 22 et 28).

Le pilotage des broches programmables (GPIOs) constituant les ports série émulés 32 est opéré par des moyens de contrôle des entrées/sorties 38, à savoir la routine de pilotage GPIO conventionnel du microcontrôleur. L'ensemble est contrôlé par un CPU 40, le séquencement étant assuré par un module d'horloge 42.

On notera que le composant répartiteur 20 est dépourvu d'interface réseau (interface IP/Ethernet), ce qui permet d'utiliser pour ce composant un microcontrôleur très simple, non spécialisé et donc très bon marché, la gestion de l'interfaçage avec le réseau étant dévolue au composant passerelle 22 qui est essentiellement dédié à cette fonction.

Pour l'envoi depuis le réseau de gestion de données destinées à l'un des serveurs 12 (données RX), le GPIO se contente de router ces données vers le serveur approprié en activant la broche programmable qui lui correspond. Les données RX seront ensuite lues et décodées par le serveur, qui prendra une action appropriée.

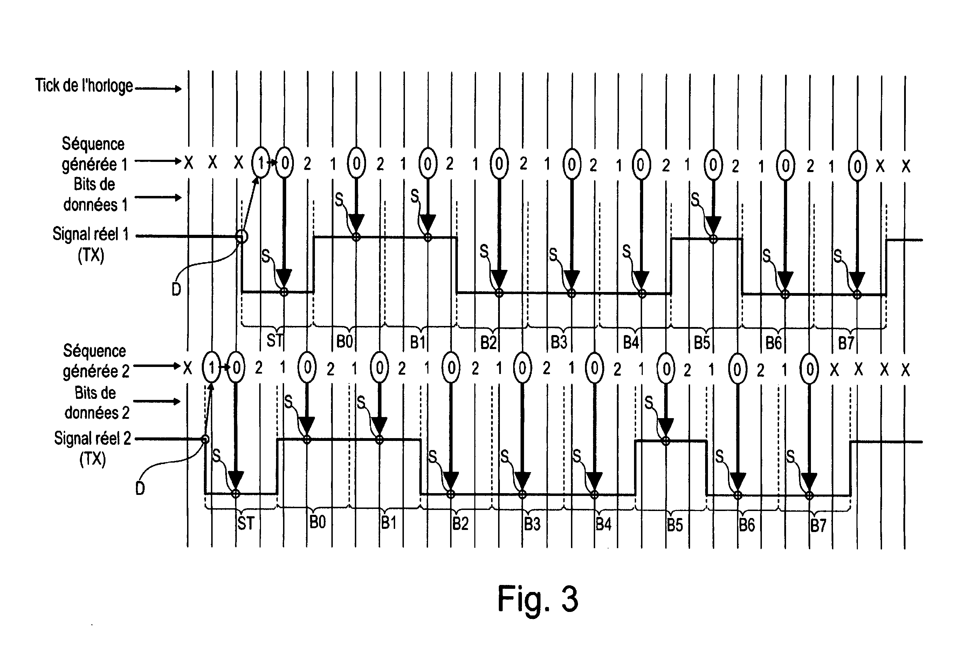

Dans l'autre sens, pour l'envoi depuis l'un des serveurs 12 de données destinées au réseau de gestion (données TX), ces données sont reçues sur la broche programmable du composant répartiteur 20, générant une transition (expliquée en détail plus bas en référence à la Figure 3) détectée par un bloc *Interrupt-On-Change* IOC 44 associé à la broche programmable correspondante. La détection de cette transition génère une interruption *IT*_*nn* vers le CPU 40. Celui-ci prend alors les actions nécessaires pour lire, bit à bit, les octets successifs émis par le serveur sur la liaison série asynchrone 36 et reçus sur le port série émulé *nn* 32. Il réémet ensuite ces données vers le port série matériel 28 de manière que le composant passerelle 22 puisse les adresser au réseau de gestion sécurisé via la liaison réseau 14.

Pour le contrôle de l'état du BIOS, il est prévu une ligne supplémentaire spécifique 46 entre chaque serveur et le composant répartiteur, de manière à permettre la transmission de l'information *ctrl_bios_nn* reflétant l'état du BIOS du serveur *nn* vers le réseau de gestion via le port série matériel 28 et le composant passerelle 22, de la même façon que pour les octets d'information TX émis par le serveur.

En variante, la liaison 46 peut être établie non pas vers le composant répartiteur 20, mais vers le composant passerelle 22, qui gérera et transmettra directement cette information au réseau de gestion.

Dans l'un ou l'autre cas, cette ligne 46 permet d'indiquer au composant répartiteur 20 à quel point le serveur 12 se situe dans son processus de démarrage, information qui est transmise au composant passerelle 22. Ce dernier authentifie les connexions et décide à quel moment l'utilisateur distant aura le droit de prendre le contrôle du serveur concerné, et à quel moment il n'aura pas le droit, l'interdiction se faisant simplement en ne laissant pas passer les données pendant les phases d'interdiction.

En ce qui concerne l'état du serveur (allumé/éteint...), une liaison 48 est prévue entre chacun des serveurs et le composant passerelle 22, à charge pour ce dernier de transmettre l'information correspondante *mgmt_nn* d'état du serveur *nn* vers le réseau de gestion afin que ce dernier ait connaissance de l'état réel de ce serveur. En effet, si par exemple le serveur est éteint, il ne pourra pas émettre de données via son port série matériel 34, d'où la nécessité de gérer directement cette information sans passer par le composant répartiteur 20.

La Figure 3 est un ensemble de deux chronogrammes expliquant la manière de gérer, selon l'invention, l'asynchronisme de la liaison série 36 entre chaque serveur 12 et le composant répartiteur 20 qui assure le recueil de ces données et leur routage vers le réseau de gestion sécurisé.

En effet, une difficulté tient au fait que cette liaison est une liaison asynchrone, car chaque serveur 12 dispose de son horloge propre qui, bien qu'étant de fréquence connue, n'est pas synchronisée sur celle du composant répartiteur 20.

Lorsqu'il s'agit d'envoyer des données du composant répartiteur 20 vers le serveur (données RX de la liaison 36 sur la Figure 2), cette transmission ne pose pas de difficulté particulière, dans la mesure où chacun des serveurs 12 est conçu pour être en permanence à l'écoute de données RX reçues sur son port série matériel 34.

En revanche, dans le sens inverse, pour les données émises par le serveur (données TX de la liaison 36 sur la Figure 2), le composant répartiteur 20 doit être prêt à recevoir de telles données à tout moment, à des instants non connus à l'avance, sur n'importe lequel des ports série émulés 32, et sans pouvoir contrôler le moment où le serveur émet ces données (du point de vue de la transmission des données, les serveurs 12 et le composant répartiteur 20 sont à cet égard totalement découplés).

Une autre difficulté réside dans la difficulté qu'il y a à émuler concurremment vingt ports série 32 avec le peu de puissance qu'offre un microcontrôleur. Or les signaux reçus sur les ports série émulés doivent pouvoir être traités en temps réel, ce qui implique une gestion très fine du temps alloué à la gestion de chaque port série émulé.

La solution technique proposée à cet effet consiste à utiliser une horloge générant des battements ou *ticks* à une fréquence triple de celle de la fréquence des bits de données reçus en provenance du serveur sur la liaison asynchrone 36 (cette dernière fréquence étant elle-même connue a *priori*, au moins d'une façon approximative).

On a représenté sur la Figure 3 ces *ticks* d'horloge, qui sont les mêmes pour tous les ports série émulés 32, ce qui permet d'utiliser une horloge unique, commune.

Ces *ticks* d'horloge vont servir à synchroniser le défilement d'une séquence d'échantillonnage cyclique 1-0-2-1-0-2-1-0-2 etc. reproduite sur la Figure 3.

Cette séquence n'est pas générée de façon continue, mais elle est déclenchée sur détection d'une transition du signal TX par le module IOC 44 qui envoie une interruption *IT_nn* lorsque cette transition est détectée à partir d'un état *idle* de base (correspondant dans l'exemple illustré à un niveau haut). La détection de cette transition, repérée D sur la Figure 3, déclenche le défilement de la séquence d'échantillonnage au premier *tick* d'horloge qui suit immédiatement cette détection D, la séquence étant initialisée à la valeur '1 '.

Sur la Figure 3 on a représenté deux exemples d'un même octet de signal TX arrivant sur un port série émulé, mais avec des décalages temporels différents par rapport à l'horloge interne du composant. Ces deux cas de figure correspondent à des instants différents (dans l'absolu) du déclenchement de la séquence ; il en serait de même pour des signaux arrivant sur deux ports série émulés différents, qui donneraient lieu à des séquences différentes pour chaque port série émulé (ces séquences étant cependant toutes cadencées à la même fréquence des *ticks* d'horloge, commune à tous les ports).

Après initialisation du défilement de la séquence, le microcontrôleur attend la valeur suivante de la séquence (qui est '0' puisque la séquence avait été déclenchée avec '1' comme valeur initiale) et exécuter l'échantillonnage du signal à ce moment. Ceci permet d'être sûr que dans tous les cas de figure l'échantillonnage (repéré S sur la Figure 3) interviendra quelque part entre 1/3 et 2/3 de la largeur du bit, ce qui laisse une marge amplement suffisante pour compenser les imperfections potentielles de transmission et les décalages entre les horloges respectives du serveur 12 et du composant répartiteur 20.

Le premier bit du signal TX est ainsi échantillonné, bit qui est en l'espèce le bit de *start* ST de la donnée émise par le serveur.

L'échantillonnage du signal est ensuite réitéré chaque fois que la séquence cyclique repasse par la valeur '0', et ceci bit à bit pour chacun des bits B0... B7 de l'octet de donnée, jusqu'à ce que le dernier bit B7 de l'octet ait été atteint. La séquence est alors arrêtée (comme indiqué en 'X' sur la Figure 3), le microcontrôleur reconstitue l'octet et l'envoie au composant passerelle 22 via le port série matériel 28.

On notera que, dans ce qui précède, on a choisi pour la fréquence d'horloge une valeur triple de celle de la fréquence à laquelle sont délivrés les bits de signal TX par le serveur sur la liaison asynchrone. Un multiple plus élevé, impair (5 x) serait certes possible et améliorerait la précision de l'instant d'échantillonnage, mais sans bénéfice additionnel sur la fiabilité de cet échantillonnage. En outre, ceci induirait une augmentation du nombre d'interruptions vers le CPU 40, de nature à accroitre inutilement la tâche de calcul de ce dernier. Inversement, une fréquence qui serait seulement le double de la fréquence du signal TX risquerait dans certains cas limites de créer une incertitude sur l'exactitude de l'échantillonnage, ce dernier étant opéré très près d'une transition du signal donc avec un risque de fausse détection.

## Revendications

1. Un équipement de type lame productive multiserveur (10) pour châssis modulaire, comprenant :
- une pluralité de serveurs (12) ; et
- un module de gestion, apte à être couplé d'une part à au moins un serveur et d'autre part à un réseau de gestion du châssis via une interface réseau,
**caractérisé en ce que**, avec N serveurs et le module de gestion sur une même carte de circuit, le module de gestion comporte :
- un composant passerelle (22), comprenant un port série matériel (26) et des moyens de conversion du flux de données sur l'interface réseau (24) en un flux de données série sur le port série matériel, et *vice versa ;* et
- un composant répartiteur (20), interposé entre les N serveurs et le composant passerelle,
et **en ce que** le composant répartiteur comprend :
· un port série matériel (28) de composant répartiteur, relié par une première liaison série bidirectionnelle (30) au port série matériel (26) du composant passerelle ;
· une pluralité de N broches programmables (32), chacune des ces broches programmables étant reliée par une seconde liaison série bidirectionnelle respective (36) à un port série matériel correspondant (34) de l'un des N serveurs ; et
· des moyens de contrôle des entrées/sorties (38), aptes à configurer chacune des N broches programmables en un port série émulé (32) et à coupler sélectivement ce port série émulé au port série matériel (28) du composant répartiteur.

2. L'équipement de la revendication 1, dans lequel les moyens de contrôle des entrées/sorties (38) du composant répartiteur (20) comprennent :
· des moyens de réception de données incidentes reçues sur le port série matériel (28) du composant répartiteur, en provenance du réseau de gestion via le composant passerelle (22) ; et
· des moyens de routage sélectif de ces données incidentes vers celui des N ports série émulés (32) qui correspond au serveur destinataire.

3. L'équipement de la revendication 1, dans lequel les moyens de contrôle des entrées/sorties du composant répartiteur (20) comprennent :
· des moyens de réception de données incidentes (TX) reçues sur l'un des N ports série émulés (32), en provenance du serveur correspondant à ce port ; et
· des moyens de routage de ces données incidentes vers le port série matériel (28) du composant répartiteur, à destination du réseau de gestion via le composant passerelle (22).

4. L'équipement de la revendication 3, dans lequel
- les secondes liaisons série (36) entre les N serveurs (12) et le composant répartiteur (20) sont des liaisons asynchrones, et
- les moyens de contrôle des entrées/sorties (38) du composant répartiteur (20) comprennent en outre :
· des moyens de scrutation (44), aptes à détecter une transition de signal (D) sur chacun des N ports série émulés (32) ; et
· des moyens de génération d'une interruption (IT_01 ... IT_20) en cas de détection sur un port série émulé d'une transition de signal correspondant à la réception d'une donnée incidente (TX) en provenance du serveur relié à ce port série émulé.

5. L'équipement de la revendication 4, dans lequel les moyens de scrutation sont des moyens séquencés par une horloge (42) du composant répartiteur à une fréquence de scrutation qui est un multiple impair de la fréquence des transitions de signal reçues sur les ports série émulés.

6. L'équipement de la revendication 5, dans lequel la fréquence de scrutation est triple de la fréquence des transitions de signal reçues sur les ports série émulés.

7. L'équipement de la revendication 5, dans lequel les moyens de scrutation sont aptes à générer, pour chaque port série émulé, une séquence d'échantillonnage cyclique :
- qui est synchronisée sur les impulsions de l'horloge séquençant la scrutation,
- dont la fréquence de cycle correspond à la fréquence des transitions de signal, et
- qui commence à être générée après la première détection (D) d'une transition de signal sur le port série émulé correspondant à un octet reçu en provenance du serveur,
- puis continue à être générée cycliquement et de façon continue jusqu'à détection de la fin de l'octet (B0-B7) en cours de réception en provenance du serveur,
l'échantillonnage (S) du signal (TX) étant opéré cycliquement sur un état ('0') de la séquence qui succède à l'état ('1') auquel le signal a commencé à être généré.

8. L'équipement de la revendication 1, comprenant en outre, entre chacun des N serveurs (12) et le composant répartiteur (20), une liaison (46) de transmission d'un signal de statut de BIOS du serveur, et dans lequel le composant répartiteur (20) comprend des moyens de génération d'un message de statut de BIOS et d'émission de ce message vers le réseau de gestion du châssis via le port série matériel (28) du composant répartiteur et la première liaison bidirectionnelle (30) vers le composant passerelle (22).

9. L'équipement de la revendication 1, comprenant en outre, entre chacun des N serveurs (12) et le composant passerelle (22), une liaison (48) de transmission d'un signal d'état de serveur, et dans lequel le composant passerelle (22) comprend des moyens de génération d'un message d'état de serveur et d'émission de ce message vers le réseau de gestion du châssis via l'interface réseau (24).

## Patentansprüche

1. Ausrüstung von der Art produktives Multiserver-Blade (10) für eine modulare Grundplatte, die enthält:
- eine Vielzahl von Servern (12); und
- ein Verwaltungsmodul, das einerseits mit mindestens einem Server und andererseits mit einem Verwaltungsnetz der Grundplatte über eine Netzschnittstelle gekoppelt werden kann, **dadurch gekennzeichnet, dass** das Verwaltungsmodul mit N Servern und dem Verwaltungsmodul auf der gleichen Leiterplatte aufweist:
- ein Gateway-Bauteil (22), das einen seriellen Hardware-Port (26) und Einrichtungen zur Umwandlung des Datenstroms an der Netzschnittstelle (24) in einen seriellen Datenstrom am seriellen Hardware-Port und umgekehrt enthält; und
- ein Verteiler-Bauteil (20), das zwischen die N Server und das Gateway-Bauteil eingefügt ist,
und dass das Verteiler-Bauteil enthält:
· einen seriellen Hardware-Port (28) des Verteiler-Bauteils, der über eine erste bidirektionale serielle Verbindung (30) mit dem seriellen Hardware-Port (26) des Gateway-Bauteils verbunden ist;
· eine Vielzahl von N programmierbaren Anschlussstiften (32), wobei jeder dieser programmierbaren Anschlussstifte über eine zweite bidirektionale serielle Verbindung (36) mit einem entsprechenden seriellen Hardware-Port (34) eines der N Server verbunden ist; und
· Steuereinrichtungen der Eingänge/Ausgänge (38), die jeden der N programmierbaren Anschlussstifte in einen emulierten seriellen Port (32) konfigurieren und diesen emulierten seriellen Port selektiv mit dem seriellen Hardware-Port (28) des Verteiler-Bauteils koppeln können.

2. Ausrüstung nach Anspruch 1, wobei die Einrichtungen zur Steuerung der Eingänge/Ausgänge (38) des Verteiler-Bauteils (20) enthalten:
· Einrichtungen zum Empfang von vom Verwaltungsnetz über das Gateway-Bauteil (22) stammenden ankommenden Daten, die am seriellen Hardware-Port (28) des Verteiler-Bauteils empfangen werden; und
· Einrichtungen zum selektiven Routen dieser ankommenden Daten zu demjenigen der N emulierten seriellen Ports (32), der dem Zielserver entspricht.

3. Ausrüstung nach Anspruch 1, wobei die Einrichtungen zur Steuerung der Eingänge/Ausgänge (38) des Verteiler-Bauteils (20) enthalten:
· Einrichtungen zum Empfang von an einem der N emulierten seriellen Ports (32) empfangenen ankommenden Daten (TX), die vom diesem Port entsprechenden Server stammen; und
· Einrichtungen zum Routen dieser ankommenden Daten zum seriellen Hardware-Port (28) des Verteiler-Bauteils, an das Verwaltungsnetz über das Gateway-Bauteil (22).

4. Ausrüstung nach Anspruch 3, wobei
- die zweiten seriellen Verbindungen (36) zwischen den N Servern (12) und dem Verteiler-Bauteil (20) asynchrone Verbindungen sind, und
- die Einrichtungen zur Steuerung der Eingänge/Ausgänge (38) des Verteiler-Bauteils (20) außerdem enthalten:
. Durchsuchungseinrichtungen (44), die einen Signalübergang (D) auf jedem der N emulierten seriellen Ports (32) erfassen können; und
. Einrichtungen zur Erzeugung einer Unterbrechung (IT_01 ... IT_20) im Fall einer Erfassung an einem emulierten seriellen Port eines Signalübergangs entsprechend dem Empfang eines ankommenden Datenwerts (TX), der von dem Server stammt, der mit diesem emulierten seriellen Port verbunden ist.

5. Ausrüstung nach Anspruch 4, wobei die Durchsuchungseinrichtungen von einem Taktgeber (42) des Verteiler-Bauteils auf eine Durchsuchungsfrequenz sequenzierte Einrichtungen sind, die ein ungerades Vielfaches der Frequenz der Signalübergänge ist, die an den emulierten seriellen Ports empfangen werden.

6. Ausrüstung nach Anspruch 5, wobei die Durchsuchungsfrequenz das Dreifache der Frequenz der an den emulierten seriellen Ports empfangenen Signalübergänge ist.

7. Ausrüstung nach Anspruch 5, wobei die Durchsuchungseinrichtungen in der Lage sind, für jeden emulierten seriellen Port eine zyklische Abtastfrequenz zu erzeugen:
- die auf die Impulse des die Durchsuchung sequenzierenden Taktgebers synchronisiert ist,
- deren Zyklusfrequenz der Frequenz der Signalübergänge entspricht, und
- die nach der ersten Erfassung (D) eines Signalübergangs am emulierten seriellen Port entsprechend einem empfangenen Byte ausgehend vom Server beginnt, erzeugt zu werden,
- dann weiter zyklisch und kontinuierlich bis zur Erfassung des Endes des Bytes (B0-B7) erzeugt wird, das vom Server stammend gerade empfangen wird,
wobei das Abtasten (S) des Signals (TX) zyklisch an einem Zustand ('0') der Sequenz ausgeführt wird, der auf den Zustand ('1') folgt, bei dem das Signal begonnen hat, erzeugt zu werden.

8. Ausrüstung nach Anspruch 1, die außerdem zwischen jedem der N Server (12) und dem Verteiler-Bauteil (20) eine Übertragungsverbindung (46) eines BIOS-Statussignals des Servers enthält, und wobei das Verteiler-Bauteil (20) Einrichtungen zur Erzeugung einer BIOS-Statusmitteilung und zum Senden dieser Mitteilung an das Verwaltungsnetz der Grundplatte über den seriellen Hardware-Port (28) des Verteiler-Bauteils und die erste bidirektionale Verbindung (30) zum Gateway-Bauteil (22) enthält.

9. Ausrüstung nach Anspruch 1, die außerdem zwischen jedem der N Server (12) und dem Gateway-Bauteil (22) eine Übertragungsverbindung (48) eines Serverzustandsignals enthält, und wobei das Gateway-Bauteil (22) Einrichtungen zur Erzeugung einer Serverzustandsmitteilung und zum Senden dieser Mitteilung zum Verwaltungsnetz der Grundplatte über die Netzschnittstelle (24) enthält.

## Claims

1. A device of the multi-server productive blade type (10) for a modular frame, comprising:
- a plurality of servers (12) ; and
- a management module, adapted to be coupled, on the one hand, to at least one server, and the other hand, to a frame management network, via a network interface, **characterized in that**, with N servers and the management module on a same circuit board, the management module comprises:
- a gateway component (22), comprising a hardware serial port (26) and means for converting the flow of data on the network interface (24) into a flow of serial data on the hardware serial port, and *vice versa;* and
- a distributor component (20), interposed between the N servers and the gateway component,
and **in that** the distributor component comprises:
· a hardware serial port (28) of distributor component, connected by a first bidirectional serial link (30) to the hardware serial port (26) of the gateway component;
· a plurality of N programmable pins (32), each of these programmable pins being connected by a respective second bidirectional serial link (36) to a corresponding hardware serial port (34) of one of the N servers; and
· input/output control means (38), adapted to configure each of the N programmable pins into an emulated serial port (32) and to selectively couple this emulated serial port to the hardware serial port (28) of the distributor component.

2. The device of claim 1, wherein the input/output control means (38) of the distributor component (20) comprise:
· means for receiving incident data received on the hardware serial port (28) of the distributor component from the management network via the gateway component (22) ; and
· means for selectively routing said incident data towards that of the N emulated serial ports (32) which corresponds to the recipient server.

3. The device of claim 1, wherein the input/output control means of the distributor component (20) comprise:
· means for receiving incident data (TX) received on one of the N emulated serial ports (32) from the server corresponding to this port; and
· means for routing of said incident data towards the hardware serial port (28) of the distributor component, for the management network, via the gateway component (22).

4. The device of claim 3, wherein
- the second serial links (36) between the N servers (12) and the distributor component (20) are asynchronous links, and
- the input/output control means (38) of the distributor component (20) further comprise:
· polling means (44), adapted to detect a signal transition (D) on each of the N emulated serial ports (32) ; and
· means for generating an interruption (IT_01 ... IT_02) in case of detection on an emulated serial port of a signal transition corresponding to the reception of an incident data (TX) from the server connected to this emulated serial port.

5. The device of claim 4, wherein the polling means are means sequenced by a clock (42) of the distributor component at a polling frequency that is an odd multiple of the frequency of the signal transitions received on the emulated serial ports.

6. The device of claim 5, wherein the polling frequency is three times the frequency of the signal transitions received on the emulated serial ports.

7. The device of claim 5, wherein the polling means are adapted to generate, for each emulated serial port, a cyclic sampling sequence:
- which is synchronized to the pulses of the clock sequencing the polling,
- whose cycle frequency corresponds to the frequency of the signal transitions, and
- which begins to be generated after the first detection (D) of a signal transition on the emulated serial port corresponding to a byte received from the server,
- then continues to be cyclically and continuously generated until the end of the byte (B0-B7) is detected during the reception from the server,
the sampling (S) of the signal (TX) being cyclically operated on a state ('0') of the sequence that follows the state ('1') at which the signal has begun to be generated.

8. The device of claim 1, further comprising, between each of the N servers (12) and the distributor component (20), a link (46) for the transmission of a BIOS status signal of the server, and in which the distributor component (20) comprises means for generating a BIOS status message and for emitting this message towards the frame management network via the hardware serial port (28) of the distributor component and the first bidirectional link (30) towards the gateway component (22).

9. The device of claim 1, further comprising, between each of the N servers (12) and the gateway component (22), a link (48) for the transmission of a server state signal, and in which the gateway component (22) comprises means for generating a server state message and for emitting this message towards the frame management network via the network interface (24).
